# EUROPEAN PATENT SPECIFICATION

(11) **EP 2 847 924 B1**
(45) Date of publication and mention of the grant of the patent: **26.07.2017**
(21) Application number: 13720171.1
(22) Date of filing: 08.04.2013
(51) Int. Cl.: H04L 9/08, H04L 9/32, H04L 29/06

(54) **METHOD AND DEVICE FOR CONFIGURING AN ENTITY WITH A CERTIFICATE**
VERFAHREN UND VORRICHTUNG ZUM KONFIGURIEREN EINER ENTITÄT MIT EINEM ZERTIFIKAT
PROCÉDÉ ET DISPOSITIF POUR CONFIGURER UNE ENTITÉ AVEC UN CERTIFICAT

(30) Priority: 07.05.2012 US 201261643834 P; 06.03.2013 US 201313787510
(43) Date of publication of application: 18.03.2015
(73) Proprietor: Qualcomm Incorporated, San Diego, CA 92121 (US)
(72) Inventor: HAWKES, Philip, San Diego, California 92121 (US); BENOIT, Olivier Jean, San Diego, California 92121 (US); PALANIGOUNDER, Anand, San Diego, California 92121 (US)
(74) Representative: Howe, Steven
(86) International application number: PCT/US2013/035593
(87) International publication number: WO 2013/169426

(56) References cited:
- EP-A1- 1 418 702
- EP-A2- 1 322 086
- "Wi-Fi Protected Setup Specification Version 1.0h", , 31 December 2006 (2006-12-31), pages 1-110, XP055031152, Internet Retrieved from the Internet: URL:http://gpl.back2roots.org/source/puma5 /netgear/CG3200-1TDNDS_GPL/ap/apps/wpa2/or iginal/Wi-Fi Protected Setup Specification 1.0h.pdf [retrieved on 2012-06-26]
- MYERS VERISIGN C ADAMS ENTRUST TECHNOLOGIES D SOLO CITICORP D KEMP DOD M: "Internet X.509 Certificate Request Message Format; rfc2511.txt", 19990301, 1 March 1999 (1999-03-01), XP015008294, ISSN: 0000-0003
- Ken Holbrook: "Smart Energy Profile version 2.0 Technical Requirements Document", ZigBee Alliance , 3 February 2012 (2012-02-03), pages 1-112, XP055071068, Retrieved from the Internet: URL:http://www.zigbee.org/Standards/ZigBee SmartEnergy/20TechnicalRequirementsDoc.asp x [retrieved on 2013-07-12]

## Description

### BACKGROUND

### Field

The present invention relates generally to configuring an internal entity of a remote station with a digital certificate.

### Background

Some devices contain entities that need digital certificates (hereinafter certificates) and corresponding private keys to be assigned internally before those entities in the devices function appropriately. Generally, the numeric values of a certificate and corresponding private key is very large, and it may not be reasonable to expect a user to manually enter the values. The process of providing parameters to and/or receiving parameters from the device may be considered "configuration."

There is therefore a need for a technique for configuring a certificate of an internal entity of a remote station in an effective manner.

Wi-Fi Protected Setup is described in "Wi-Fi Protected Setup Specification Version 1.0h", 31 December 2006, pages 1-110, XP055031152. EP 1 322 086 describes assignment of user certificates/private keys in token enabled public key infrastructure system. EP 1 428 702 describes a secure exchange method between two communications units, control system and server for the set-up of the method. Smart Energy Profile is described in "Smart Energy Profile version 2.0 Technical Requirements Document" by Holbrook et al, 3 February 2012, pages 1-112, XP015008294.

### SUMMARY

An aspect of the present invention may reside in a method for configuring an application-layer internal entity of a WiFi-enabled remote station according to claim 1.

In more detailed aspects of the invention, the remote station may receive a private key corresponding to the certificate in the at least one message. The remote station may provide the private key to the internal entity. The internal entity may securely communicate with the external entity also based on the private key. The remote station may receive the private key with the certificate. The certificate may include a public key, corresponding to the private key, and a public key identifier. The remote station may send a public key to be certified in at least one other message. The certificate may be generated in association with the sent public key. The remote station may generate the public key and a corresponding private key. Also, the remote station may receive, with the certificate, a shared secret, an identity for the shared secret, a PIN, a password, and/or a certificate lifetime.

In other more detailed aspects of the invention, the at least one message may comprise WSC (WiFi Simple Configuration) M7 and/or M8 messages. The internal entity may be a SEP2 (Smart Energy Profile 2) client, and the external entity may be a SEP2 server. Alternatively, the internal entity may be a SEP2 server, and the external entity may be a SEP2 client. The registrar may be a smartphone and/or an access point. The registrar may have a user interface, and the remote station may not have a user interface. Also, the certificate may be a self-signed certificate containing a root-of-trust public key.

Another aspect of the invention may reside in a WiFi-enabled remote station according to claim 14.

Another aspect of the invention may reside in a computer program according to claim 15.

### BRIEF DESCRIPTION OF THE DRAWINGS

FIG. 1 is a block diagram of an example of a wireless communication system.
FIG. 2 is a block diagram showing a remote station, a smartphone, an access point, and another station.
FIG. 3 is a flow diagram of a method for configuring an internal entity of a remote station with a certificate, according to the present invention.
FIG. 4 is a block diagram of a computer including a processor and a memory.
FIG. 5 is a flow diagram of messages between a remote station, a registration station, and an access point.

### DETAILED DESCRIPTION

The word "exemplary" is used herein to mean "serving as an example, instance, or illustration." Any embodiment described herein as "exemplary" is not necessarily to be construed as preferred or advantageous over other embodiments.

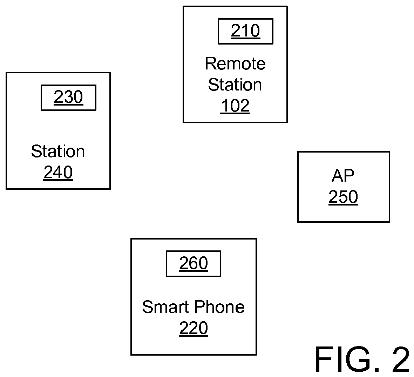

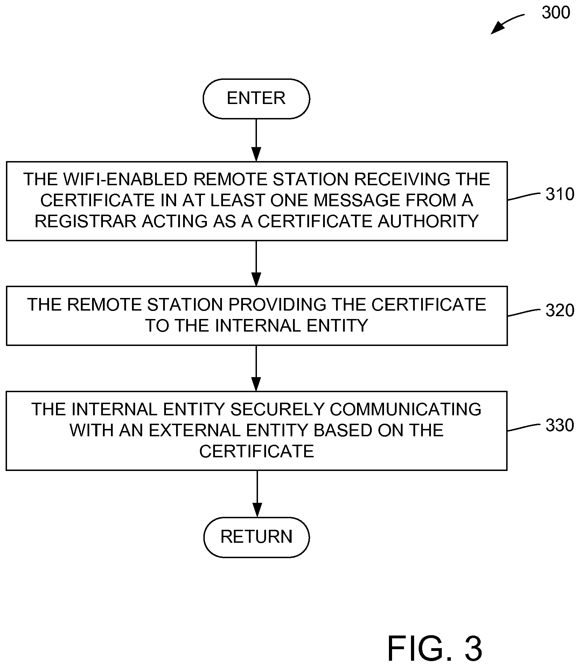

With reference to FIGS. 2, 3 and 5, an aspect of the present invention resides in a method 300 for configuring an internal entity 210 of a Wi-Fi-enabled remote station 102/510 with a certificate. In the method, the remote station receives the certificate in at least one message from a registrar 520 acting as a certificate authority (step 310). The remote station provides the certificate to the internal entity (step 320). The internal entity securely communicates with an external entity 230, 250 or 260 based on the certificate (step 330).

In more detailed aspects of the invention, the remote station 102/510 may receive a private key corresponding to the certificate in the at least one message. The remote station may provide the private key to the internal entity 210. The internal entity may securely communicate with the external entity also based on the private key. The remote station may receive the private key with the certificate. The certificate may include a public key, corresponding to the private key, and a public key identifier. The remote station may send a public key to be certified in the at least one message. The certificate may be generated in association with the sent public key. The remote station may generate the public key and a corresponding private key. Also, the remote station may receive, with the certificate, a shared secret, an identity for the shared secret, a PIN, a password, and/or a certificate lifetime.

The at least one message may comprise WSC M7 and/or M8 messages. The internal entity 210 may be a SEP2 client, and the external entity may be a SEP2 server. Alternatively, the internal entity may be a SEP2 server, and the external entity 230 may be a SEP2 client. The registrar 520 may be a smartphone 220 and/or an access point 250/530. The registrar may have a user interface, and the remote station may not have a user interface. The registrar may be acting as a pseudo-certificate authority. Also, the certificate may be a self-signed certificate having a root-of-trust public key.

A Certificate Authority (CA) is generally a trusted third party that acts a root-of-trust in a public key infrastructure and that provides services that authenticate the identities of entities. The CA issues certificates that affirm the identity of the certificate subject, and that bind the identity to the public key contained in the certificate. The CA signs the certificate with its private key, and issues the corresponding CA public key in a self-signed CA or root certificate that provides the root-of-trust in the public key infrastructure.

In a certificate chain, the CA may issue an intermediate certificate to a subordinate CA, which is then used to sign a user certificate. The user certificate is authenticated using the intermediate certificate, and the intermediate certificate is authenticated using the root certificate. This description is an example for a 3 level hierarchical PKI. Of course, the number of levels may be higher than 3.

The technique of the present invention allows a remote station to receive the certificate, the corresponding private key, and/or the root-of-trust public key/certificate from an external device using WiFi as the data medium. The remote station may contain multiple internal entities, and may receive multiple sets of certificates, the corresponding private keys, and/or the root-of-trust public key/certificate.

In more detailed aspects of the invention, the remote station 102 may already have a public/private key pair, or it may generate its own public/private key pair. The remote station may send, within the WSC parameters, its public key to be certified to the external device using WiFi as the data medium. The technique of the present invention then allows the remote station to receive the certificate corresponding to its public key and eventually the root-of-trust public key/certificate from the external device using WiFi as the data medium.

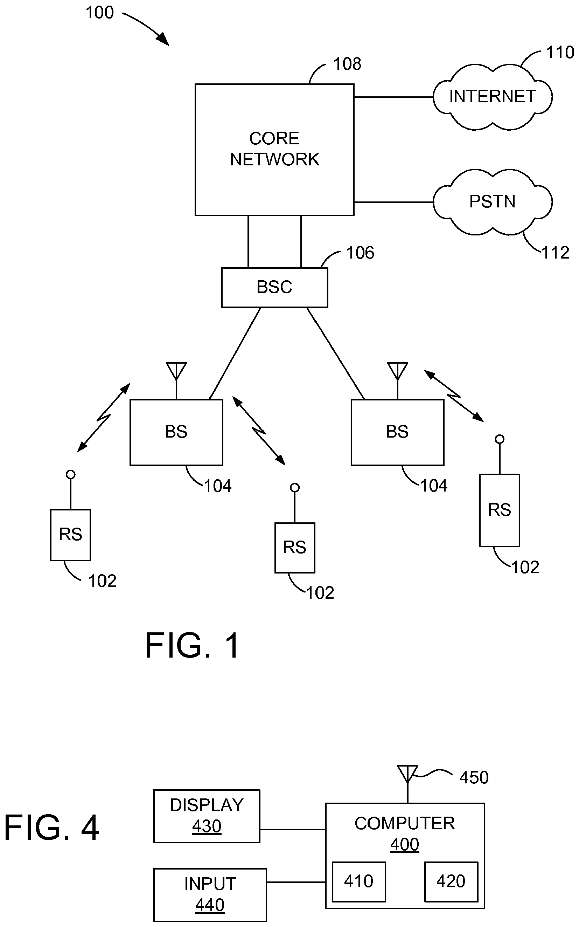

With further reference to FIG. 4, another aspect of the invention may reside in a WiFi-enabled remote station 102 with an internal entity 210, comprising: means 410 for receiving a certificate in at least one message from a registrar acting as a certificate authority; means 410 for providing the certificate to the internal entity; and means 410 for securely communicating with an external entity based on the certificate.

The remote station 102 may further comprise: means 410 for receiving a private key corresponding to the certificate in the at least one message; means 410 for providing the private key to the internal entity; and means 410 for securely communicating with the external entity also based on the private key.

Another aspect of the invention may reside in a WiFi-enabled remote station 102 with an internal entity 210, comprising a processor 410 configured to: receive a certificate in at least one message from a registrar acting as a certificate authority; and provide the certificate to the internal entity for securely communicating with an external entity based on the certificate.

Another aspect of the invention may reside in a computer program product, comprising computer-readable medium 420, comprising: code for causing a computer 400 to receive a certificate in at least one message from a registrar acting as a certificate authority; and code for causing a computer 400 to provide the certificate to an internal entity for securely communicating with an external entity based on the certificate.

As shown in FIG. 4, the remote station 102 may comprise a computer 400 that includes a processor 410, a storage medium 420 such as memory and/or a disk drive, a display 430, and an input such as a keypad 440, and a wireless connection 450, such as a Wi-Fi connection and/or cellular connection.

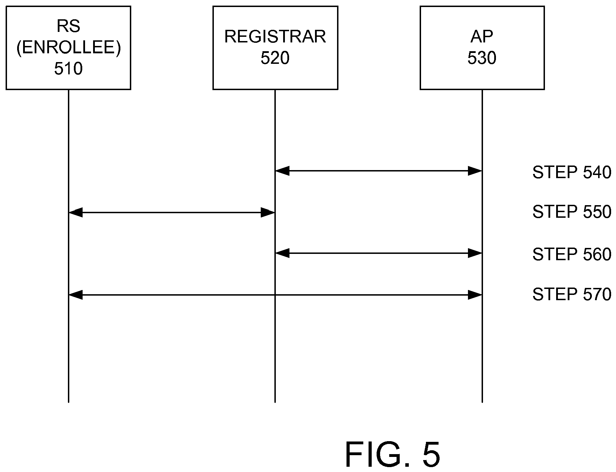

With reference to FIG. 5, as an example, a remote station (RS) or Access Point (AP) operating in accordance with IEEE 802.11 may need to be provided with the credentials (shared secret) used to establish secure communication with the appropriate entities outside the device. The station or AP may also need to communicate its credentials to allow another station to be configured with these credentials. The Wi-Fi Simple Configuration (WSC) protocol, also known as Wi-Fi Protect Setup (WPS), provides a mechanism for an entity called a registrar 520 (such as smartphone 220) to configure remote stations and APs.

FIG. 5 illustrates the use of the WSC protocol in the framework of an 802.11 WLAN. The registrar 520 may configure or retrieve an AP's SSID and passphrase (step 540). The RS (enrollee) 510 (i.e., remote station 102) may be configured with the L2 (IEEE 802.11) parameters for AP 530 (i.e., access point 250). The SEP2 parameters may be retrieved/configured, as needed (step 550). Optionally, the registrar may update AP with enrollee-specific L2 parameters (step 560). The enrollee STA (internal entity) and the AP may authenticate using the programmed SSID and passphrase. The enrollee STA and the AP may apply 802.11i security, resulting in establishing IP connectivity for enrollee (step 570).

If application layer (L7) entities secure communication (for example, using TLS - Transport Layer Security), then the remote station 102 may need to be configured with the certificate and private key used to establish secure communication with the appropriate external entities outside the station. Other parameters may also be similarly configured. The certificate and/or certificate identifiers (such as a certificate fingerprint or attribute of the certificate), and other parameters, may need to be provided to the other entities in order to establish trustworthy communication. Smart Energy Profile (SEP) 2.0 is an example of such an application, and SEP2.0 Servers and SEP2.0 Clients are examples of application layer entities. SEP2.0 may enable and/or support an energy management system. WSC (in the example of FIG. 5) provides a mechanism for secure configuration of 802.11 credentials for WSC-enabled APs and WSC-enabled STA/stations.

A framework called WSEP2 may be used for configuring SEP2.0 entities on Wi-Fi devices. However, other entities, including other application layer entities, may be configured by applying this technique. In addition to security credentials, other types of parameters may be configured using this technique.

A WSC Registrar 520 may configure parameters for SEP2 entities on WSC-enabled APs 530/250 and WSC-enabled STAs of Remote Stations RSs 510/102 (also called enrollees). The AP may not be hosting SEP2 entities, whereas the enrollee may be hosting SEP2 entities. However, it is possible for the AP to host SEP2 entities that are configured in the same way as SEP2 entities on the enrollee.

The registrar 520 may be a smartphone, computer, tablet, or personal computing device, including Wi-Fi-enabled devices and/or WSC-enabled devices, acting as a wireless external registrar, but it is also possible to use a Registrar internal to an AP 530 or an External Registrar communicating with the Enrollee via an AP, using UPnP to communicate with the AP (as per WSC). The registrar 520 may configure the AP 530 as per WSC. The registrar may configure parameters on other SEP2 entities 230 in the network. This configuration may use the process in step 550 if the SEP2 entities reside on WSC-capable devices. Alternatively, the configuration may be via a human interaction involving the UI of the device hosting the SEP2 entities and the UI of the registrar. Alternatively, the configuration may use a mechanism such as Universal Plug and Play (UPnP) communicating across a data medium.

The registrar 520 may configure the STA on the enrollee 530 using WSC messages. As per WSC, the "Encrypted Settings" in WSC messages M7 and M8 may be used to configure internal 802.11 parameters. To configure internal SEP2 parameters, additional WSC attributes may be added inside M7 and M8 - these WSC attributes contain the SEP2.0 internal parameters being sent to or received from the register. Some of the additional WSC attributes may be sent in WSC attributes that are not encrypted. Some of the additional WSC attributes may be sent in encrypted form. In one example, some of the additional WSC attributes may be sent inside the "Encrypted Settings" attributes. In another example, additional WSC attributes may be sent in other encrypted WSC attributes using keys generated as part of in the WSC exchange. The parameters sent by the registrar to the enrollee having at least one SEP2 client may include: one or more private keys for authenticating the internal SEP2 client(s) to external SEP2 server(s); client certificate(s) containing the public key(s) corresponding to those private key(s); optionally a shared secret (e.g., PIN) for use by the SEP2 client(s) for verifying those SEP2 servers that are authorized to provide service to the SEP2 client(s); and optionally server certificate(s) or server certificate identities of SEP2 server(s) that the SEP2 clients may be authorized to use. If the enrollee has at least one SEP2 server, the parameters sent by the registrar may include: client certificate(s) and/or client certificate identity(ies) of SEP2 client(s) that may be authorized by the SEP2 server(s); and optionally, a shared secret for verifying to the SEP2 client(s) that the SEP2 server(s) are authorized to serve the SEP2 client(s).

The registrar 520 may configure enrollee-specific credentials to the AP 530 using WFAWLANConfig, as specified in WSC. The registrar may configure enrollee-specific SEP2 credentials to other SEP 2.0 entities using the same mechanisms.

The STA in the enrollee 510 may authenticate to the AP 530 using the credentials configured by the registrar 520, resulting in the STA and AP establishing secure communication and providing the enrollee with connectivity for communicating with other devices (including the devices hosting the other SEP2 entities).

The SEP2 entities on the enrollee may authenticate and subsequently trust other SEP2 entities as dictated by the configured credentials in the corresponding devices. The SEP2 entities may then exchange application layer data. This mechanism may be used to manage which SEP2 entities should trust each other.

The certificates and corresponding keys provisioned to the SEP2 clients by the registrar 520 in step 550 may be generated by the registrar or provided to the registrar by an external entity. Alternatively, a public/private key pair may be generated by the SEP2 client which then requests a certificate for the public key from the registrar 520. For example, the external entity may be acting on behalf of a device manufacturer, a business (such as a utility), or a user. Also, the registrar may act as a pseudo-Certificate Authority that issues a certificate to provide a no-cost or low-cost root-of-trust for a group of stations. The AP 530 similarly may act as a pseudo-Certificate Authority.

The WSC message mechanism also may be used to configure server certificates and corresponding private keys to stations or devices containing SEP2 server(s) and then optionally provisioning the server certificate and/or server certificate identity(ies) to stations or devices containing SEP2 client(s). Also, the WSC mechanism also may be used to configure a station or device with a Certificate Authority self-signed certificate having a root-of-trust public key.

At the time of configuring certificate related parameters (such as certificates, private keys, certificate identifies, PINs and so forth) the implementations of the internal entities (such as SEP2 client(s) and SEP2 server(s)) may or may not be present on the device, and the implementations may or may not be being running on the operating system.

Future evolutions of WSC may be used in the place of WSC as currently described. The technique uses a user friendly mechanism to configure client certificates on the SEP2.0 client, and supports a variety of certificate types.

With reference to FIG. 1, a wireless remote station (RS) 102 (e.g. a mobile station MS) may communicate with one or more base stations (BS) 104 of a wireless communication system 100. The wireless communication system 100 may further include one or more base station controllers (BSC) 106, and a core network 108. Core network may be connected to an Internet 110 and a Public Switched Telephone Network (PSTN) 112 via suitable backhauls. A typical wireless mobile station may include a handheld phone, or a laptop computer. The wireless communication system 100 may employ any one of a number of multiple access techniques such as code division multiple access (CDMA), time division multiple access (TDMA), frequency division multiple access (FDMA), space division multiple access (SDMA), polarization division multiple access (PDMA), or other modulation techniques known in the art.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary embodiments, the functions described may be implemented in hardware, software, firmware, or any combination thereof. If implemented in software as a computer program product, the functions may be stored on or transmitted over as one or more instructions or code on a computer-readable medium. Computer-readable media includes both non-transitory computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the scope of the invention. Thus, the present invention is not intended to be limited to the embodiments shown herein but is to be accorded the widest scope consistent with the following claims.

## Claims

1. A method (300) for configuring an application-layer internal entity of a WiFi-enabled remote station with a certificate, comprising:
receiving (310), by the remote station, the certificate in at least one message from a registrar acting as a certificate authority for the application-layer internal entity;
providing (320), by the remote station, the certificate to the application-layer internal entity; and
securely communicating (330), by the application-layer internal entity, with an external entity based on the certificate.

2. The method of claim 1, further comprising:
the remote station receiving a private key corresponding to the certificate in the at least one message;
the remote station providing the private key to the internal entity; and
the internal entity securely communicating with the external entity also based on the private key.

3. The method of claim 2, wherein the remote station receives the private key with the certificate.

4. The method of claim 2, wherein the certificate comprises a public key, corresponding to the private key, and a public key identifier.

5. The method of claim 1, further comprising:
the remote station sending a public key to be certified in at least one other message,
wherein the certificate is generated in association with the public key.

6. The method of claim 5, further comprising:
the remote station generating the public key and a corresponding private key.

7. The method of claim 1, further comprising:
the remote station receiving, with the certificate, a shared secret, an identity for the shared secret, a PIN, a password, and/or a certificate lifetime.

8. The method of claim 1, wherein the at least one message comprises WSC M7 and/or M8 messages, incorporating additional attributes to configure the application-layer internal entity

9. The method of claim 1, wherein the internal entity is a SEP2 client, and the external entity is a SEP2 server, or the internal entity is a SEP2 server, and the external entity is a SEP2 client.

10. The method of claim 1, wherein the registrar has a user interface.

11. The method of claim 1, wherein the registrar is a smartphone, or an access point

12. The method of claim 1, wherein the remote station does not have a user interface.

13. The method of claim 1, wherein the certificate is a self-signed certificate containing a root-of-trust public key.

14. A WiFi-enable remote station (102) with an application-layer internal entity, comprising:
means (410) for receiving a certificate in at least one message from a registrar acting as a certificate authority for the application-layer internal entity;
means (410) for providing the certificate to the application-layer internal entity; and
means (410) for securely communicating by the application-layer internal entity with an external entity based on the certificate.

15. A computer program adapted to perform the method of any of claims 1 to 13, when being executed on a computer.

## Patentansprüche

1. Verfahren (300) zum Konfigurieren einer Anwendungsschicht-internen Entität einer WiFi-fähigen Fernstation mit einem Zertifikat, das Folgendes beinhaltet:
Empfangen (310), durch die Fernstation, des Zertifikats in wenigstens einer Nachricht von einem als Zertifizierungsstelle für die Anwendungsschicht-interne Entität wirkenden Registrar;
Bereitstellen (320), durch die Fernstation, des Zertifikats der Anwendungsschicht-internen Entität; und
sicheres Kommunizieren (330), durch die Anwendungsschicht-interne Entität, mit einer externen Entität auf der Basis des Zertifikats.

2. Verfahren nach Anspruch 1, das ferner Folgendes beinhaltet:
Empfangen, durch die Fernstation, eines Private Key entsprechend dem Zertifikat in der wenigstens einen Nachricht;
Bereitstellen, durch die Fernstation, des Private Key der internen Entität; und
sicheres Kommunizieren, durch die interne Entität, mit der externen Entität ebenfalls auf der Basis des Private Key.

3. Verfahren nach Anspruch 2, wobei die Fernstation den Private Key mit dem Zertifikat empfängt.

4. Verfahren nach Anspruch 2, wobei das Zertifikat einen Public Key entsprechend dem Private Key und einen Public-Key-Identifikator umfasst.

5. Verfahren nach Anspruch 1, das ferner Folgendes beinhaltet:
Senden, durch die Fernstation, eines zu zertifizierenden Public Key in wenigstens einer anderen Nachricht,
wobei das Zertifikat in Assoziation mit dem Public Key erzeugt wird.

6. Verfahren nach Anspruch 5, das ferner Folgendes beinhaltet:
Erzeugen, durch die Fernstation, des Public Key und eines entsprechenden Private Key.

7. Verfahren nach Anspruch 1, das ferner Folgendes beinhaltet:
Empfangen, durch die Fernstation, mit dem Zertifikat, eines gemeinsamen Geheimnisses, einer Identität für das gemeinsame Geheimnis, einer PIN, eines Passworts und/oder einer Zertifikatslebenszeit.

8. Verfahren nach Anspruch 1, wobei die wenigstens eine Nachricht WSC M7 und/oder M8 Nachrichten umfasst, die zusätzliche Attribute zum Konfigurieren der Anwendungsschicht-internen Entität beinhalten.

9. Verfahren nach Anspruch 1, wobei die interne Entität ein SEP2-Client ist und die externe Entität ein SEP2-Server ist oder die interne Entität ein SEP2-Server ist und die externe Entität ein SEP2-Client ist.

10. Verfahren nach Anspruch 1, wobei der Registrar eine Benutzeroberfläche hat.

11. Verfahren nach Anspruch 1, wobei der Registrar ein Smartphone oder ein Zugangspunkt ist.

12. Verfahren nach Anspruch 1, wobei die Fernstation keine Benutzeroberfläche hat.

13. Verfahren nach Anspruch 1, wobei das Zertifikat ein selbstsigniertes Zertifikat ist, das einen Vertrauensanker-Public-Key enthält.

14. WiFi-fähige Fernstation (102) mit einer Anwendungsschicht-internen Entität, die Folgendes umfasst:
Mittel (410) zum Empfangen eines Zertifikats in wenigstens einer Nachricht von einem Registrar, der als Zertifizierungsstelle für die Anwendungsschicht-interne Entität agiert;
Mittel (410) zum Bereitstellen des Zertifikats der Anwendungsschicht-internen Entität; und
Mittel (410) zum sicheren Kommunizieren, durch die Anwendungsschicht-interne Entität, mit einer externen Entität auf der Basis des Zertifikats.

15. Computerprogramm, ausgelegt zum Ausführen des Verfahrens nach einem der Ansprüche 1 bis 13, wenn es auf einem Computer abgearbeitet wird.

## Revendications

1. Procédé (300) pour configurer une entité interne de couche application d'une station à distance orientée WiFi, avec un certificat, comprenant :
recevoir (310), par la station à distance, le certificat dans au moins un message d'une autorité d'enregistrement agissant en qualité d'autorité de certification pour l'entité interne de couche application ;
fournir (320), par la station à distance, le certificat à l'entité interne de couche application ; et
communiquer d'une manière sécurisée (330), par l'entité interne de couche application, avec une entité externe sur la base du certificat.

2. Procédé selon la revendication 1, comprenant en outre le fait que :
la station à distance reçoit une clé privée correspondant au certificat dans au moins un message ;
la station à distance fournit la clé privée à l'entité interne ; et
l'entité interne communique d'une manière sécurisée avec l'entité externe également sur la base de la clé privée.

3. Procédé selon la revendication 2, dans lequel la station à distance reçoit la clé privée avec le certificat.

4. Procédé selon la revendication 2, dans lequel le certificat comprend une clé publique, correspondant à la clé privée, et un identificateur de clé publique.

5. Procédé selon la revendication 1, comprenant en outre le fait que :
la station à distance envoie une clé publique à certifier dans au moins un autre message,
dans lequel le certificat est généré en association avec la clé publique.

6. Procédé selon la revendication 5, comprenant en outre le fait que :
la station à distance génère la clé publique et une clé privée correspondante.

7. Procédé selon la revendication 1, comprenant en outre le fait que :
la station à distance reçoit, avec le certificat, un secret partagé, une identité pour le secret partagé, un NIP, un mot de passe et/ou une durée de vie du certificat.

8. Procédé selon la revendication 1, dans lequel le au moins un message comprend des messages WSC M7 et/ou M8, incorporant des attributs supplémentaires pour configurer l'entité interne de couche application.

9. Procédé selon la revendication 1, dans lequel l'entité interne est un client SEP2, et l'entité externe est un serveur SEP2, ou bien l'entité interne est un serveur SEP2 et l'entité externe est un client SEP2.

10. Procédé selon la revendication 1, dans lequel l'autorité d'enregistrement a une interface utilisateur.

11. Procédé selon la revendication 1, dans lequel l'autorité d'enregistrement est un téléphone intelligent ou un point d'accès.

12. Procédé selon la revendication 1, dans lequel la station à distance n'a pas d'interface utilisateur.

13. Procédé selon la revendication 1, dans lequel le certificat est un certificat auto-signé contenant une clé publique racine de confiance.

14. Station à distance orientée WiFi (102) avec une entité interne de couche application, comprenant :
un moyen (410) pour recevoir un certificat dans au moins un message d'une autorité d'enregistrement agissant en qualité d'autorité de certification pour l'entité interne de couche application ;
un moyen (410) pour fournir le certificat à l'entité interne de couche application ; et
un moyen (410) pour communiquer d'une manière sécurisée par l'entité interne de couche application avec une entité externe sur la base du certificat.

15. Programme informatique adapté pour mettre en oeuvre le procédé selon l'une quelconque des revendications 1 à 13, lorsque exécuté sur un ordinateur.
